# EUROPEAN PATENT SPECIFICATION

(11) **EP 0 918 166 B1**
(45) Date of publication and mention of the grant of the patent: **05.02.2003**
(21) Application number: 97309416.2
(22) Date of filing: 21.11.1997
(51) Int. Cl.: F16B 37/08, B62D 43/10

(54) **Fastening device**
Befestigungsvorrichtung
Dispositif de fixation

(43) Date of publication of application: 26.05.1999
(73) Proprietor: McKechnie Specialist Products Limited, Alcester Warwickshire B49 6HN (GB)
(72) Inventor: Trussell, Gary, Bracknell, Berkshire, RG12 7BZ (GB)
(74) Representative: Haley, Stephen

(56) References cited:
- WO-A-96/01955
- DE-A- 4 037 255
- US-A- 5 098 242
- US-A- 5 639 196

## Description

The present invention relates to a fastening device.

There are a number of applications, such as when fastening the spare wheel of a vehicle to its storage position on the vehicle, in which problems with fastening occur. It is clearly advantageous to have a fixing mechanism which is simple to operate and allows the item, such as the wheel, to be quickly and easily detached. At the same time, however, the mechanism must provide sufficient fastening strength to prevent it from working loose due to the vibrations and shock received during normal operation of the vehicle. In addition, as the thickness of the object, such as the hub of the wheel, can vary according to an object type, it is preferable to provide a mechanism which provides adequate clamping load substantially independent of object thickness. Furthermore, both in terms of reliability and manufacturing costs, it is beneficial to provide a fastening device which has a minimal number of components and which is simple to manufacture and operate.

WO-A-9601955 discloses a fastening device for attachment to a screw-threaded stud, the fastening device having a sliding engaging member. US-A-5639196 discloses a fastening device with a screw-threaded engaging member.

According to the present invention there is provided a fastening device comprising:
a retaining housing, slidable, in use, on a stud having protrusions formed on a surface thereof; a bore formed in the housing and arranged to pass around and engage, in use, with the stud; characterised by:
   a sprag pivotally attached to the housing and arranged such that, in use, it engages with the stud, the sprag having, on its engaging surface, protrusions to engage with those on the stud; and
   the bore having, on its engaging surface protrusions for engaging in corresponding protrusions in the stud when the sprag engages the stud.

The protrusions may be formed so as to define a screw thread, so that rotation of the housing with respect to the stud moves the housing in the axial direction of the stud.

The housing and sprag are preferably formed as a single component, with a sprag biasing member attaching the sprag to the housing. The sprag may have a lever formed on it to allow a user to move it out of engagement with the stud for removal of the housing and sprag from the stud in use.

One example of the present invention will now be described with reference to the accompanying drawings, in which:
Figure 1 is a cross-sectional side view of an example of the present invention; and
Figure 2 is an isometric view of the example of figure 1.

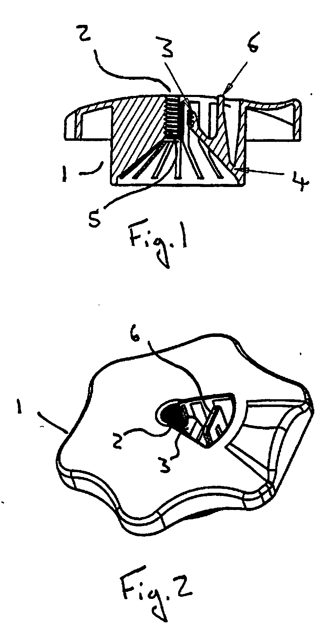

Referring to figure 1, a retaining housing 1 has a central bore 2 which, in use, passes over a stud (not shown). A sprag 3 is attached to the housing 1 via a sprung member 4 which urges the sprag 3, in use, into engagement with the stud. Engagement of the sprag 3 with the stud also urges the engaging surface 5 of the bore into engagement with the stud. In this engaged position, as the stud has protrusions formed thereon and because there are protrusions on the surface of both the sprag 3 and engaging surface 5 of the bore 2, the retaining housing 1 is retained in position on the stud, holding an object onto the stud when required.

In this example the various protrusions are formed so as to form a screw thread so that movement of the retaining housing 1 in the axial direction of the stud can be performed by rotation of the housing 1 about the stud.

Total quick release or quick attachment of the retaining housing 1 can be performed by moving the sprag 3 out of engagement with the stud by a user urging a lever 6 towards the outer rim of the housing 1, allowing the stud to pass freely through the bore 2. The sprag 3, in this example, is arranged so that the housing 1 can pass over the stud in one direction (the fastening direction) without a user moving the sprag 3.

Whilst the housing 1 and sprag 3 can be formed as a single unit in a single moulding from a single plastics material, it may be preferable to provide metal reinforcement, for example, at the sprung member region or engaging surfaces, or to form the housing 1 and sprag 3 from two types of plastics material, if required.

## Claims

1. A fastening device comprising:
a retaining housing (1), slidable, in use, on a stud having protrusions formed on a surface thereof;
a bore (2) formed in the housing (1) and arranged to pass around and engage, in use, with the stud, **characterised by**:
a sprag (3) pivotally attached to the housing (1) and arranged such that, in use, it engages with the stud, the sprag (3) having, on its engaging surface, protrusions to engage with those on the stud; and
the bore (2) having, on its engaging surface (5) protrusions for engaging in corresponding protrusions in the stud when the sprag (3) engages the stud.

2. A device according to claim 1, wherein the protrusions are formed so as to define a screw thread.

3. A device according to claim 1 or claim 2, wherein the housing (1) and sprag (3) are formed as a single component, with a sprag biasing member (4) attaching the sprag (3) to the housing.

4. A device according to any preceding claim, wherein the sprag (3) has a lever (6) formed on it to allow a user to move it out of engagement with the stud for removal of the housing (1) and sprag (3) from the stud in use.

## Patentansprüche

1. Befestigungsvorrichtung, umfassend:
- ein Festhaltegehäuse (1), das in der Verwendung gleitbar auf einem Bolzen ist, auf dessen Oberfläche Fortsätze ausgebildet sind;
- eine im Gehäuse (1) ausgebildete Bohrung (2), die so angeordnet ist, dass sie in der Verwendung um den Bolzen herum reicht und mit diesem im Eingriff ist; **gekennzeichnet durch**:
- eine Fanglasche (3), die am Gehäuse (1) schwenkbar befestigt und so angeordnet ist, dass sie in der Verwendung mit dem Bolzen in Eingriff ist, wobei die Fanglasche (3) auf ihrer Eingriffsoberfläche Fortsätze hat, die mit denjenigen des Bolzens in Eingriff sind; und
- wobei die Bohrung (2) auf ihrer Eingriffsoberfläche (5) Fortsätze zum Eingriff in entsprechende Fortsätze auf dem Bolzen hat, wenn die Fanglasche (3) mit dem Bolzen in Eingriff ist.

2. Vorrichtung nach Anspruch 1, bei der die Fortsätze so ausgebildet sind, dass sie ein Schraubgewinde definieren.

3. Vorrichtung nach Anspruch 1 oder Anspruch 2, bei der das Gehäuse (1) und die Fanglasche (3) als eine einzige Komponente ausgebildet sind, wobei ein Fanglaschenvorspannelement (4) die Fanglasche (3) am Gehäuse befestigt.

4. Vorrichtung nach einem der vorhergehenden Ansprüche, bei der die Fanglasche (3) einen auf ihr ausgebildeten Hebel (6) hat, um einem Benutzer zu erlauben, sie mit dem Bolzen außer Eingriff zu bewegen, um bei der Verwendung das Gehäuse (1) und die Fanglasche (3) vom Bolzen zu entfernen.

## Revendications

1. Dispositif de fixation, comprenant :
un boîtier de retenue (1), capable de coulisser en utilisation sur un goujon ayant des saillies formées sur une surface de lui-même ;
un perçage (2) ménagé dans le boîtier (1) et agencé de manière à passer autour et à engager en utilisation le goujon,
**caractérisé par** :
un sabot (3) attaché en pivotement sur le boîtier (1) et agencé de manière à, en utilisation, engager le goujon, le sabot (3) ayant, sur sa surface d'engagement, des saillies destinées à s'engager avec celles sur le sabot ; et
le perçage (2) ayant, sur sa surface d'engagement (5), des saillies destinées à s'engager dans des saillies correspondantes dans le goujon lorsque le sabot (3) engage le goujon.

2. Dispositif selon la revendication 1, dans lequel les saillies sont formées de manière à définir un pas de vis.

3. Dispositif selon l'une ou l'autre des revendications 1 et 2, dans lequel le boîtier (1) et le sabot (3) sont formés comme un composant unique, avec un élément de sollicitation de sabot (4) qui attache le sabot (3) sur le boîtier.

4. Dispositif selon l'une quelconque des revendications précédentes, dans lequel le sabot (3) a un levier (6) formé sur lui-même pour permettre à un utilisateur de le déplacer hors d'engagement avec le goujon en vue de l'enlèvement du boîtier (1) et du sabot (3) depuis le goujon en utilisation.
